# EUROPEAN PATENT APPLICATION

(11) **EP 2 393 102 A2**
(43) Date of publication of application: **07.12.2011**
(21) Application number: 11004246.2
(22) Date of filing: 23.05.2011
(51) Int. Cl.: H01H 85/46

(54) **Power source apparatus with fuse-implemented over-current cut-off**

(30) Priority: 27.05.2010 JP 2010122091
(71) Applicant: Sanyo Electric Co., Ltd., Osaka 570-8677 (JP)
(72) Inventor: Matsumoto, Satoru, Osaka 570-8677 (JP); Inui, Shinya, Osaka 570-8677 (JP); Tatsumi, Hiroshi, Osaka 570-8677 (JP)
(74) Representative: Hertz, Oliver

(57) **Abstract**

The power source apparatus is provided with batteries 1 that supply power to a load; a current regulating circuit 2 that controls battery 1 current; a fuse 6 connected in series with the batteries 1; a first computation circuit 3 that computes a first allowable current that can flow through the batteries 1 based on at least one parameter including battery 1 specified current, temperature, voltage, and remaining capacity; and a second computation circuit 4 that computes a second allowable current that can flow through the fuse 6 without blowing the fuse 6 based on the time integral of current flow through the fuse 6. The current regulating circuit 2 controls the battery 1 current to a value lower than the first allowable current computed by the first computation circuit 3 and the second allowable current computed by the second computation circuit 4.

## Description

### BACKGROUND OF THE INVENTION

### 1. Field of the Invention

The present invention relates to a power source apparatus that cuts-off abnormally high battery current with a fuse connected in series with the batteries, and in particular to a power source apparatus that prevents fusing at currents lower than the specified (rated) fuse current.

### 2. Description of the Related Art

A power source apparatus that prevents excessive battery current with a series-connected fuse has been developed (refer to Japanese Laid-Open Patent Publication 2008-193776). When a current exceeding the rated fuse current flows through the batteries in the disclosed power source apparatus, the fuse opens to protect the circuit. Fig. 1 shows the power source apparatus cited in JP 2008-193776.

In the disclosed power source apparatus, the batteries 91 are separated into two battery blocks 95, and the battery blocks 95 are connected in series via a fuse 98. In addition, contactor relays 92 (high-power relays) are connected to the output-side of the batteries 91. When excessive current flows through the batteries 91 of this system, the fuse 98 melts open to cut-off the battery 91 current. This battery system achieves a high degree of safety by melting (fusing or blowing) the fuse 98 open with over-current.

Fuses have the characteristic that even when the current is lower than the rated current, a high current flowing for a long period will melt the fuse open. Even if the fuse opens with current below the rated current, battery output is cut-off and the system becomes unusable. This drawback can be evaded by increasing the current rating of the fuse. However, increasing the current rating has the detrimental effect that the flow of abnormally high battery current cannot be quickly cut-off. Accordingly, there is demand for fuse characteristics that enable prompt fusing for abnormal over-current while not opening for currents that are high but do not require cut-off. Unfortunately, since fuses blow by melting due to the heat generated by current flow, satisfying this demand is extremely difficult. This is because Joule-heating generated as a result of current flow raises the temperature of the fuse, and Joule-heating not only increases with current, but also increases with the time integral of current. For example, to limit battery current to a maximum of 300A, a 300A rated fuse is connected in series with the batteries. If 300A flows for a given time, the fuse will open to cut-off battery current. However, the fuse will also open after a long period of current flow with a current lower than 300A such as 280A. This has the drawback that the fuse melts and cuts-off battery current at currents below 300A.

A fuse is connected in series with the batteries as a protection device that does not self-reset from a fused open state. Consequently, a blown fuse puts the batteries in an unusable state. In a power source apparatus used to supply power to a motor that drives a vehicle, a fuse that melts open at a current below the rated current has the detrimental effect that the vehicle cannot be driven by the motor. Accordingly, the fuse should protect the batteries from over-current, but it is important for the fuse not to melt open when there is no over-current.

Fuses also have the characteristic that repeated high current flow will degrade a fuse and lower the effective current rating at which the fuse actually melts open. For example, high current flow at or above 50% of the rated current is one reason the actual fuse-blowing current becomes lower than the rated current. Specifically, the fuse-blowing current of a fuse repeatedly passing high currents becomes lower than the rated current, and this has the negative effect that the fuse can melt open at a current below the specified current to disable the supply of power to the load.

The present invention was developed with the object of resolving the drawbacks described above. Thus, it is a primary object of the present invention to provide a power source apparatus that can set the fuse-blowing current to a value that protects the circuitry from over-current damage while preventing erroneous fuse-melting that cuts-off battery output.

### SUMMARY OF THE INVENTION

The power source apparatus of the present invention is provided with batteries 1 that supply power to a load; a current regulating circuit 2 that controls battery 1 current; a fuse 6 connected in series with the batteries 1; a first computation circuit 3 that computes a first allowable current that can flow through the batteries 1 based on at least one parameter including battery 1 specified current, temperature, voltage, and remaining capacity; and a second computation circuit 4 that computes a second allowable current that can flow through the fuse 6 without blowing the fuse 6 based on the time integral of current flow through the fuse 6. In this power source apparatus, the current regulating circuit 2 controls the battery 1 current to a value lower than the first allowable current computed by the first computation circuit 3 and the second allowable current computed by the second computation circuit 4.

The power source apparatus described above has the characteristic that erroneous fuse-melting that cuts-off battery output can be prevented while setting the fuse-blowing current to a value that protects the circuitry from over-current damage. This is because fuse temperature is computed from fuse current to determine a current value that will not melt the fuse, and erroneous fuse-melting is avoided by controlling battery current not to exceed that current value.

In the power source apparatus of the present invention, the second computation circuit 4 can compute fuse temperature from the time integral of the current flowing through the fuse 6 and the ambient temperature in the vicinity of the fuse 6; and the second computation circuit 4 can compute the second allowable current from that fuse temperature. Since this power source apparatus computes the second allowable current from ambient temperature in addition to the time integral of the current, it has the characteristic that the fuse-melting current can be computed more accurately to prevent erroneous fuse-blowing while protecting the circuit.

In the power source apparatus of the present invention, the second computation circuit 4 can compute fuse 6 temperature and the second allowable current by integrating current with a period less than or equal to 1 sec. Since this power source apparatus periodically computes the second allowable current with a period less than or equal to 1sec, it has the characteristic that the maximum current permitted to flow through the batteries can be quickly computed for accurate control.

In the power source apparatus of the present invention, the second computation circuit 4 can store the fuse 6 temperature setting in memory. When the computed fuse temperature is lower than the temperature setting, the rated fuse 6 current can be used as the second allowable current. When the computed fuse temperature is higher than the temperature setting, the second allowable current can be made lower than the rated current. Since this power source apparatus computes the second allowable current based on whether the computed fuse temperature is higher or lower than the temperature setting, the current at which the fuse actually melts can be computed more accurately to prevent erroneous fuse-melting while reliably preventing abnormally high battery currents via the fuse.

In the power source apparatus of the present invention, fuse 6 current can be detected by the sensor that detects battery 1 current. In this power source apparatus, there is no need to provide a dedicated sensor to detect fuse current, and the second allowable current can be computed with a simple circuit structure.

In the power source apparatus of the present invention, the second computation circuit 4 can compute the second allowable current from the time integral of current flowing through the fuse 6 and fuse 6 degradation. This power source apparatus has the characteristic that even when the fuse has degraded, erroneous fuse-melting can be prevented while protecting the batteries from abnormally high currents.

The power source apparatus of the present invention has a load, which is a motor 22 that drives a vehicle, and the current regulating circuit 2 can be provided on the vehicle-side of an integrated system. An allowable battery 1 current can be determined from the first allowable current computed by the first computation circuit 3 and the second allowable current computed by the second computation circuit 4, and that allowable battery 1 current can be sent to the vehicle-side current regulating circuit 2. Since this power source apparatus controls battery current via signals sent to the current regulating circuit disposed on the vehicle-side to reliably prevent abnormally high battery currents while preventing erroneous fuse-melting, it has the characteristic that circuitry can be protected and the vehicle can be safely driven by the batteries. The above and further objects of the present invention as well as the features thereof will become more apparent from the following detailed description to be made in conjunction with the accompanying drawings.

### BRIEF DESCRIPTION OF THE DRAWINGS

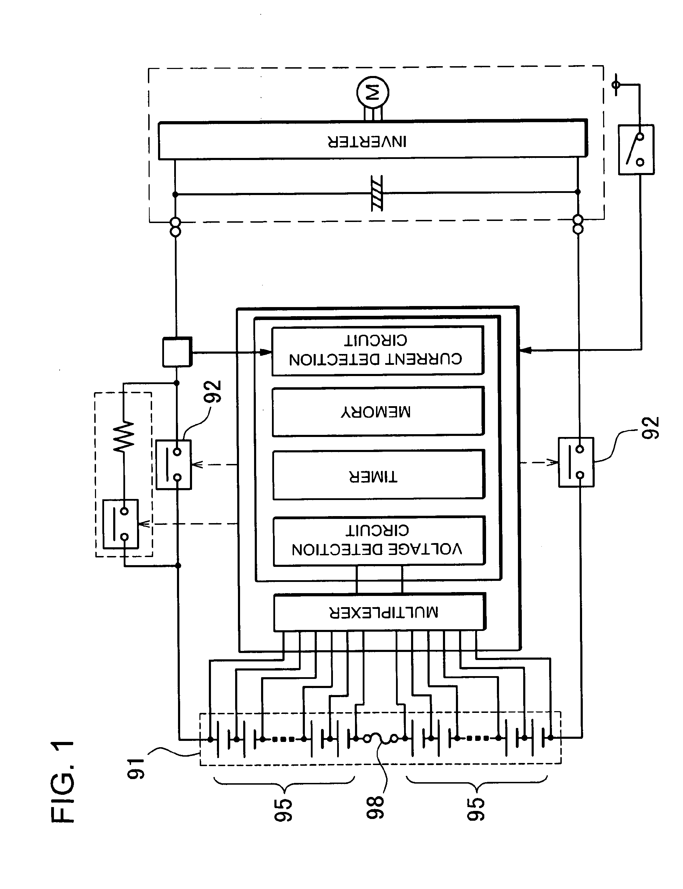

Fig. 1 is an abbreviated schematic of a prior art power source apparatus;
Fig. 2 is an abbreviated schematic of a power source apparatus for an embodiment of the present invention;
Fig. 3 is a graph showing temperature characteristics of a fuse in the power source apparatus for an embodiment of the present invention;
Fig. 4 is a block diagram showing an example of the power source apparatus installed on-board a hybrid vehicle driven by an engine and an electric motor;
Fig. 5 is a block diagram showing an example of the power source apparatus installed on-board an electric vehicle driven by an electric motor only; and
Fig. 6 is a block diagram showing an example of a power source apparatus used in a power storage application.

### DETAILED DESCRIPTION OF THE EMBODIMENT(S)

The following describes embodiments of the present invention based on the figures.

The power source apparatus of the present invention is used to supply power to a motor that drives a vehicle such as a hybrid vehicle (hybrid car), a plug-in hybrid vehicle, or an electric vehicle; or it is used as a power source in any high-power application.

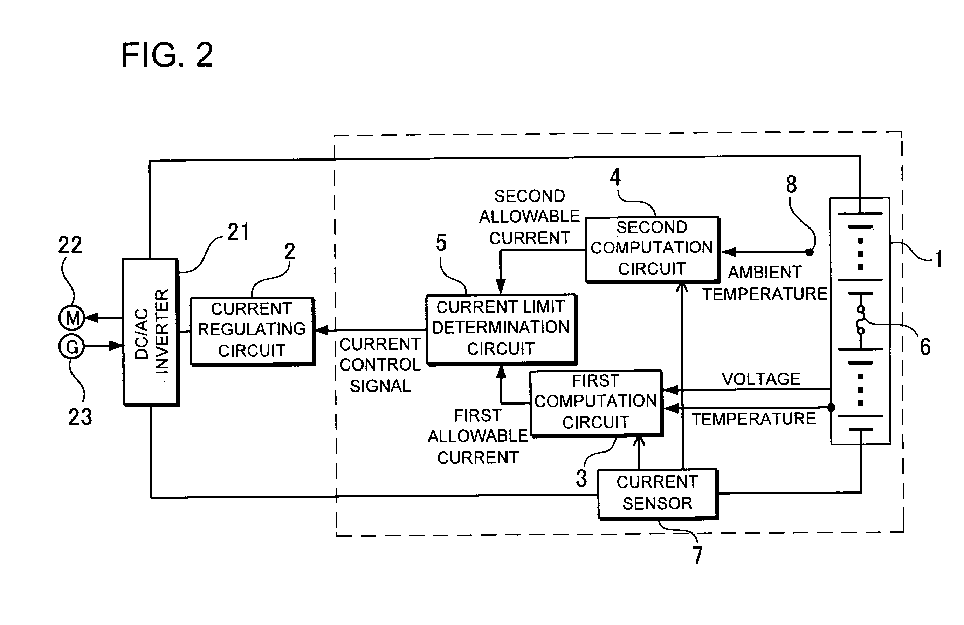

The power source apparatus of Fig. 2 is provided with batteries 1 that supply power to a motor 22, which is the load, through a direct current-to-alternating current (DC/AC) inverter 21; a current regulating circuit 2 that controls the DC/AC inverter 21 to control battery 1 current; a fuse 6 connected in series with the batteries 1 to cut-off abnormally high battery 1 current; a first computation circuit 3 that computes a first allowable current that can flow through the batteries 1 based on at least one parameter including battery 1 specified current, temperature, voltage, and remaining capacity; and a second computation circuit 4 that computes a second allowable current that can flow through the fuse 6 without blowing the fuse 6 based on the time integral of current flow through the fuse 6.

The power source apparatus of Fig. 2 is provided with a current limit determination circuit 5 that determines allowable battery 1 current from the first allowable current computed by the first computation circuit 3 and the second allowable current computed by the second computation circuit 4. The current limit determination circuit 5 compares the first allowable current with the second allowable current and selects the smaller current value as the allowable battery 1 current. Specifically, when the first allowable current is less than the second allowable current, the first allowable current is used as the allowable battery 1 current; when the second allowable current is less than the first allowable current, the second allowable current is used as the allowable battery 1 current; and when the first and second allowable currents are the same value, either current value is used as the allowable battery 1 current. The current limit determination circuit 5 determines the allowable battery 1 current and sends a current control signal to the current regulating circuit 2.

The current regulating circuit 2 of the power source apparatus shown in the figure is disposed on the vehicle-side of the system. The current regulating circuit 2 controls the DC/AC inverter 21 according to current control signals sent from the current limit determination circuit 5 to keep the maximum battery 1 current below the allowable battery 1 current. Specifically, the current regulating circuit 2 controls the DC/AC inverter 21 to keep the maximum battery 1 current below the first allowable current computed by the first computation circuit 3 and the second allowable current computed by the second computation circuit 4. This prevents erroneous fuse 6 blowing (melting). Here, the current regulating circuit can also be disposed on the power source apparatus-side of the system. In that case, the vehicle-side DC/AC inverter is controlled by the current regulating circuit on the power source apparatus-side of the system to keep the maximum battery 1 current below the allowable current.

The current regulating circuit 2 controls the maximum battery 1 current to prevent erroneous melting of the fuse 6. However, if an over-current in excess of the allowable battery 1 current flows, the fuse 6 will melt open and protect the circuit. Specifically, the current regulating circuit 2 does not control the battery 1 current to always keep the fuse 6 from blowing. Rather, the current regulating circuit 2 prevents the fuse from melting and cutting-off current when that current is within the allowable battery 1 current range. When abnormally high battery 1 current flows, the fuse 6 will blow to protect the circuit.

The fuse 6 is set to a specified breaking capacity that melts the fuse 6 at an abnormally high battery 1 current. For example, in a vehicle power source apparatus, the specified breaking capacity is set to melt the fuse 6 at a current from 100A to 500A. However, the specified breaking capacity for a vehicle power source apparatus fuse 6 is set to an optimum value depending on parameters such as motor specifications, battery type, battery capacity, and vehicle driving conditions.

To prevent battery 1 over-charging and over-discharging and to prevent over-current from flowing through the batteries 1, the first computation circuit 3 computes a first allowable current, which is the current permitted to flow through the batteries 1. The first allowable current is computed based on at least one, or on a plurality of the parameters including specified battery 1 current, battery 1 temperature, battery 1 voltage, and remaining battery 1 capacity. Preferably, the first computation circuit 3 computes the first allowable current based on all the battery 1 parameters; specified current, temperature, voltage, and remaining capacity. A first computation circuit that computes the first allowable current from specified current, temperature, and remaining capacity uses the minimum current value computed from the specified current, temperature, and remaining capacity as the first allowable current.

The first computation circuit 3 uses the specified battery 1 current as the maximum current value, and computes the first allowable current by revising that specified current according to the battery 1 temperature, voltage, and remaining capacity. When battery 1 temperature becomes high or becomes low, the first computation circuit 3 revises the first allowable current lower than the specified battery 1 current. For example, if battery 1 temperature rises above a predetermined maximum temperature, the first computation circuit 3 revises the first allowable current below the specified battery 1 current. If battery 1 temperature drops below an optimum temperature as well, the first computation circuit 3 revises the first allowable current below the specified battery 1 current. The first computation circuit 3 stores the relation between the first allowable current and battery 1 temperature as a function (to compute first allowable current from battery temperature) or as a look-up-table.

Further, if battery 1 voltage drops below a predetermined minimum voltage during battery 1 discharging, the first computation circuit 3 revises the first allowable current below the specified battery 1 current. If battery 1 voltage drops below a discharge-terminating voltage, the first allowable current is set to 0A. During battery 1 charging, if battery 1 voltage rises above a predetermined maximum voltage, the first allowable current is revised to a value below the specified battery 1 current. In addition, if battery 1 voltage rises above a charge-terminating voltage, the first allowable current is set to 0A.

Further, if remaining battery 1 capacity drops below a predetermined minimum remaining capacity during battery 1 discharging, the first computation circuit 3 revises the first allowable current below the specified battery 1 current. If remaining battery 1 capacity drops to a value such as 0% indicating over-discharging, the first allowable current is set to 0A. During battery 1 charging, if remaining battery 1 capacity rises above a predetermined maximum remaining capacity, the first allowable current is revised to a value below the specified battery 1 current. In addition, if remaining battery 1 capacity rises to a value such as 100% indicating over-charging, the first allowable current is set to 0A.

The first computation circuit 3 computes remaining battery 1 capacity from the battery 1 charging and discharging currents. Remaining battery 1 capacity is calculated by adding the integrated charging current and subtracting the integrated discharging current. In addition, the remaining battery 1 capacity computed from the integrated current is corrected by the battery 1 voltage. During discharge when battery 1 voltage drops to a value indicating 0% remaining capacity, the first computation circuit 3 corrects the current-integrated remaining capacity to 0%. During charging when the battery 1 voltage rises to a value indicating 100% remaining capacity (full-charge), the first computation circuit 3 corrects the current-integrated remaining capacity to 100%.

The second computation circuit 4 estimates fuse 6 temperature from the integral of current flowing through the fuse 6, and from that fuse 6 temperature computes a second allowable current, which is the maximum current that can flow through the fuse 6 without melting (blowing) the fuse 6. The second computation circuit 4 can estimate the fuse 6 temperature more accurately by using both the integrated current and the ambient temperature in the vicinity of the fuse 6. This is because the integrated current determines temperature rise in the fuse 6 and the ambient temperature determines the fuse 6 temperature with no current-induced temperature rise. The ambient temperature can be measured by a temperature sensor 8. However, since the rise in temperature due to current flow is large compared to the ambient temperature, fuse temperature can also be estimated from current-induced temperature rise assuming a nominal ambient temperature.

The rise in fuse 6 temperature depends on the amount of Joule-heating generated by current flow and the thermal radiating characteristics of the fuse 6. The second computation circuit 4 repeatedly computes fuse 6 temperature rise with a constant period of 0.5sec. However, the second computation circuit can also compute fuse 6 temperature with a period less than 0.5sec. By shortening the period for fuse 6 temperature computation, the second computation circuit 4 can quickly determine the rise in fuse 6 temperature. By lengthening the period for fuse temperature computation, the computations can be performed with a low-cost, low-speed processing unit.

Fuse 6 temperature rises with Joule-heating generated by current flow and drops due to thermal energy radiated away from the fuse 6. Thermal energy from Joule-heating is computed by multiplying the square of the current times the electrical resistance and the time that current flows. The current is the battery 1 current measured by the current sensor 7. The electrical resistance is a given value known in advance. Accordingly, the second computation circuit 4 can multiply the electrical resistance times the time integral of the current squared to determine the thermal energy generated by Joule-heating. The thermal energy radiated away from the fuse 6 is determined by the fuse 6 temperature and environmental conditions in the vicinity of the fuse 6. Therefore, the second computation circuit 4 stores in memory a function or look-up-table specifying the relation between the radiated thermal energy and fuse 6 temperature. The second computation circuit 4 computes the energy that heats the fuse 6 by subtracting the radiated thermal energy from the thermal energy generated by Joule-heating. The rise in fuse 6 temperature is then computed from the energy that heats the fuse 6 and the heat capacity of the fuse 6. Temperature rise is proportional to the energy that heats the fuse 6 and inversely proportional to the specific heat (capacity) of the fuse 6. The second computation circuit 4 stores the fuse 6 heat capacity in memory and computes temperature rise from the energy that heats the fuse 6.

Further, the second computation circuit 4 computes the second allowable current from the fuse temperature. As fuse temperature rises, the fuse 6 will melt open at a lower current. Accordingly, the second computation circuit 4 lowers the second allowable current as the fuse 6 temperature approaches the fuse-melting temperature. The second computation circuit 4 stores the second allowable current as a function of fuse temperature or as a look-up-table in memory to determine the second allowable current from the computed fuse temperature.

The second computation circuit 4 described above computes fuse temperature from the time integral of current flowing through the fuse 6, and computes the second allowable current from the fuse temperature. The second computation circuit can also compute the second allowable current directly from the integrated fuse current without computing fuse temperature. This second computation circuit stores the relation between the second allowable current and the integrated fuse current as a function or as a look-up-table. This second computation circuit uses the integrated fuse current in the function retrieved from memory or in the look-up-table to determine the second allowable current.

The first allowable current computed by the first computation circuit 3 and the second allowable current computed by the second computation circuit 4 are output to the current limit determination circuit 5. The current limit determination circuit 5 selects the lower current value from the first allowable current and the second allowable current and outputs it as a current control signal to the current regulating circuit 2. The current regulating circuit 2 controls the DC/AC inverter 21 according to the current control signal to supply power to the motor 22, which is the load, in a manner that keeps the maximum battery 1 current from exceeding the first allowable current and the second allowable current. For a power source apparatus in a motor vehicle, the current regulating circuit 2 controls the DC/AC inverter 21 to charge the batteries 1 with the generator 23 using a charging current that does not exceed the first allowable current and the second allowable current.

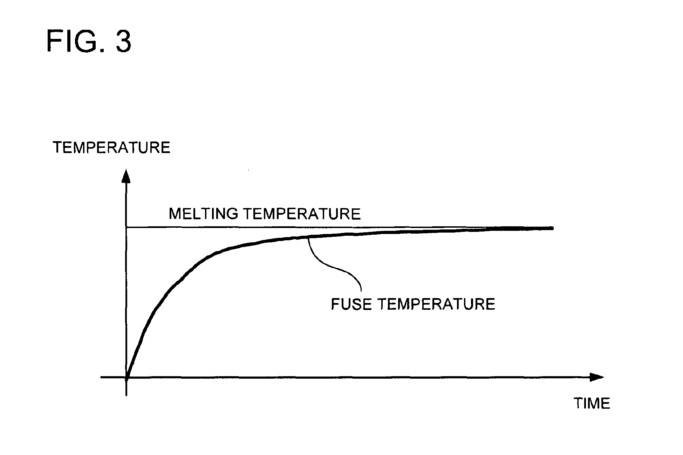

The power source apparatus described above limits the maximum battery 1 current not only to the first allowable current, but to both the first allowable current and the second allowable current. Fuse 6 temperature during battery 1 charging and discharging does not rise to the fuse-melting temperature shown in Fig. 3, and the fuse 6 does not blow with currents within the allowable battery 1 current range. Therefore, the system has the characteristic that abnormal fuse-melting can be reliably avoided while preventing battery 1 over-current with the fuse 6.

The power source apparatus described above can be used as the power source on-board a motor vehicle. An electrically driven vehicle such as a hybrid vehicle (hybrid car) or plug-in hybrid vehicle driven by both an engine and an electric motor, or an electric vehicle driven only by a motor can be the vehicle that carries the power source apparatus on-board. The power source apparatus is used as the power source in these types of vehicles.

### (Hybrid Vehicle Power Source Apparatus)

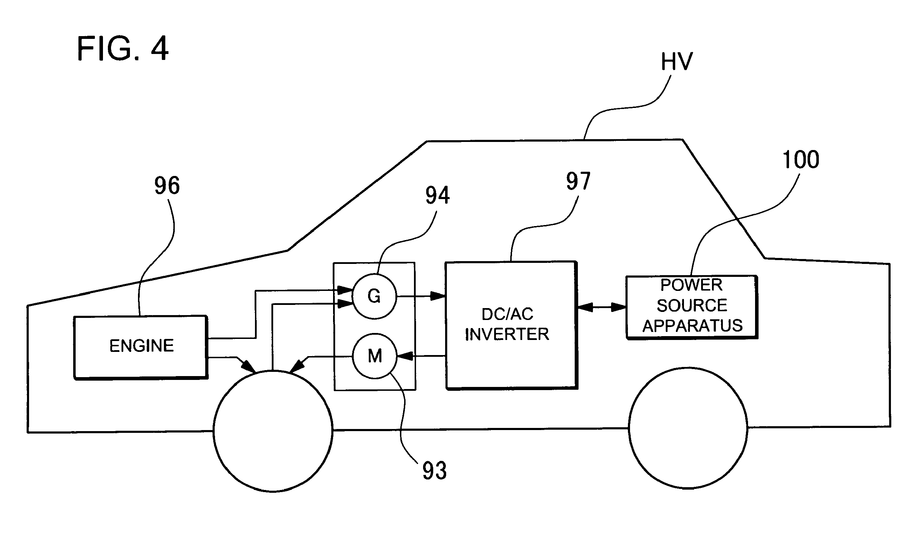

Fig. 4 shows an example of the power source apparatus installed on-board a hybrid vehicle driven by both an engine and a motor. The vehicle HV carrying the power source apparatus shown in this figure is provided with a driving motor 93 and engine 96 to drive the vehicle HV, a power source apparatus 100 to supply power to the motor 93, and a generator 94 to charge the power source apparatus 100 batteries. The power source apparatus 100 is connected to the motor 93 and generator 94 via a DC/AC inverter 97. The vehicle HV is driven by both the engine 96 and motor 93 while charging and discharging the power source apparatus 100 batteries. The vehicle is driven by the motor 93 during inefficient modes of engine operation such as during acceleration and low speed operation. The motor 93 is operated by power supplied from the power source apparatus 100. The generator 94 is driven by the engine 96, or by regenerative braking during brake application to charge the power source apparatus 100 batteries.

### (Electric Vehicle Power Source Apparatus)

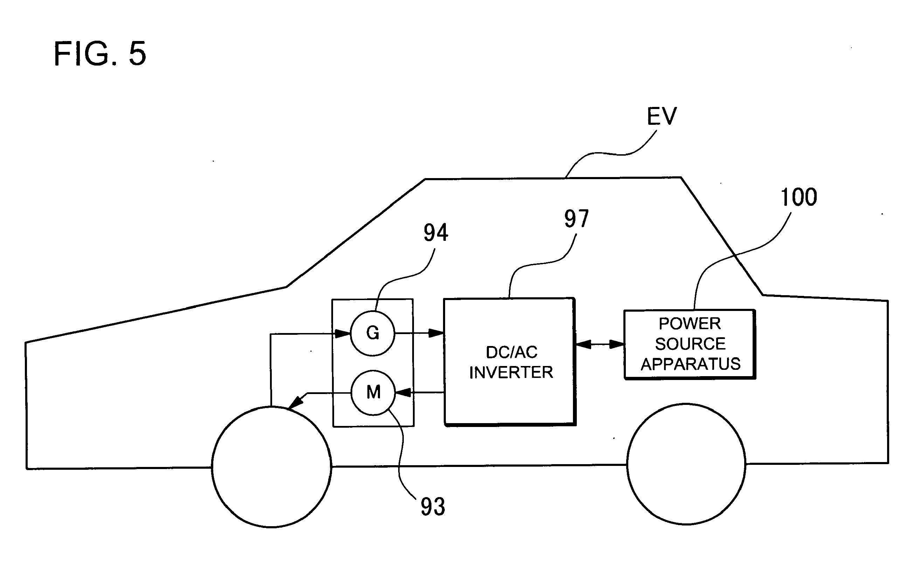

Fig. 5 shows an example of the power source apparatus installed on-board an electric vehicle driven only by a motor. The vehicle EV carrying the power source apparatus shown in this figure is provided with a driving motor 93 to drive the vehicle EV, a power source apparatus 100 to supply power to the motor 93, and a generator 94 to charge the power source apparatus 100 batteries. The motor 93 is operated by power supplied from the power source apparatus 100. The generator 94 is driven by energy acquired during regenerative braking to charge the power source apparatus 100 batteries.

### (Power Source Apparatus in a Power Storage Application)

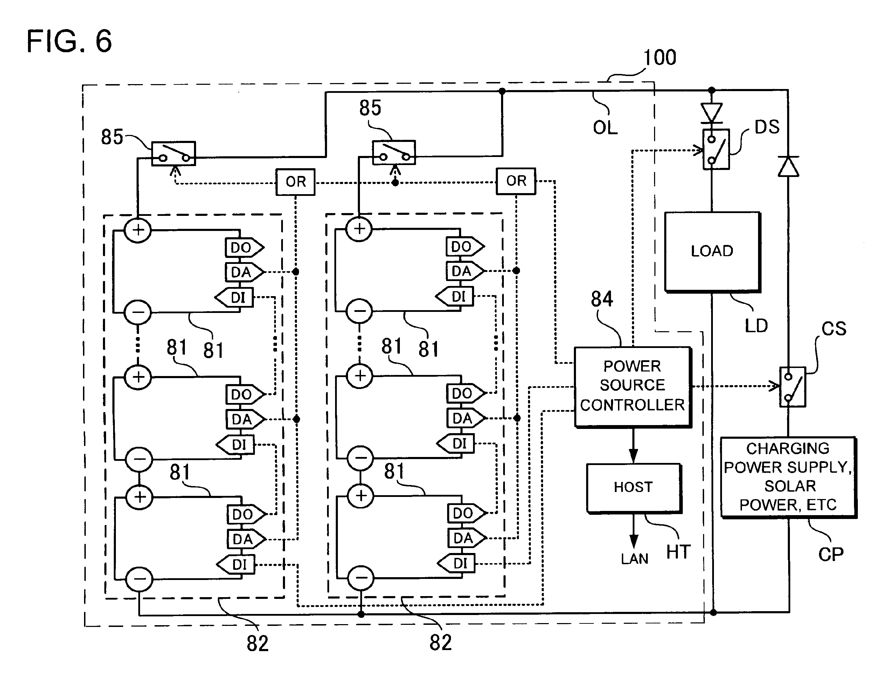

The power source apparatus can be used not only as the power source in motor vehicle applications, but also as an on-board (mobile) power storage resource. For example, it can be used as a power source system in the home or manufacturing facility that is charged by solar power or late-night (reduced-rate) power and discharged as required. It can also be used for applications such as a streetlight power source that is charged during the day by solar power and discharged at night, or as a backup power source to operate traffic signals during power outage. An example of a power source apparatus for these types of applications is shown in Fig. 6. The power source apparatus 100 shown in this figure has a plurality of battery packs 81 connected to form battery units 82. Each battery pack 81 has a plurality of battery cells connected in series and/or parallel. Each battery pack 81 is controlled by a power source controller 84. After charging the battery units 82 with a charging power supply CP, the power source apparatus 100 drives a load LD. Accordingly, the power source apparatus 100 has a charging mode and a discharging mode. The load LD and the charging power supply CP are connected to the power source apparatus 100 through a discharge switch DS and a charging switch CS respectively. The discharge switch DS and the charging switch CS are controlled ON and OFF by the power source apparatus 100 power source controller 84. In the charging mode, the power source controller 84 switches the charging switch CS ON and the discharge switch DS OFF to allow the power source apparatus 100 to be charged from the charging power supply CP. When charging is completed by fully-charging the batteries or by charging to a battery capacity at or above a given capacity, the power source apparatus can be switched to the discharging mode depending on demand by the load LD. In the discharging mode, the power source controller 84 switches the charging switch CS OFF and the discharge switch DS ON to allow discharge from the power source apparatus 100 to the load LD. Further, depending on requirements, both the charging switch CS and the discharge switch DS can be turned ON to allow power to be simultaneous supplied to the load LD while charging the power source apparatus 100.

The load LD driven by the power source apparatus 100 is connected through the discharge switch DS. In the discharging mode, the power source controller 84 switches the discharge switch DS ON to connect and drive the load LD with power from the power source apparatus 100. A switching device such as a field effect transistor (FET) can be used as the discharge switch DS. The discharge switch DS is controlled ON and OFF by the power source apparatus 100 power source controller 84. In addition, the power source controller 84 is provided with a communication interface to communicate with externally connected equipment. In the example of Fig. 6, the power source controller 84 is connected to an external host computer HT and communicates via known protocols such as universal asynchronous receiver transmitter (UART) and recommended standard-232 (RS-232C) protocols. Further, depending on requirements, a user interface can also be provided to allow direct user operation. Each battery pack 81 is provided with signal terminals and power terminals. The signal terminals include a battery pack input-output terminal DI, a battery pack error output terminal DA, and a battery pack connecting terminal DO. The battery pack input-output terminal Dl allows output and input of signals to and from the power source controller 84 and other battery packs. The battery pack connecting terminal DO allows output and input of signals to and from another related battery pack. The battery pack error output terminal DA serves to output battery pack abnormalities to components and devices outside the battery pack. In addition, the power terminals allow the battery packs 81 to be connected in series or parallel. The battery units 82 are connected in parallel to the output line OL via parallel connecting switches 85.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

## Claims

1. A power source apparatus comprising:
batteries (1) that supply power to a load;
a current regulating circuit (2) that controls battery (1) current;
a fuse (6) connected in series with the batteries (1);
a first computation circuit (3) that computes a first allowable current that can flow through the batteries (1) based on at least one parameter including battery (1) specified current, temperature, voltage, and remaining capacity; and
a second computation circuit (4) that computes a second allowable current that can flow through the fuse (6) without blowing the fuse (6) based on the time integral of current flow through the fuse (6),
**characterized in that**
the current regulating circuit (2) controls the battery (1) current to a value lower than the first allowable current computed by the first computation circuit (3) and the second allowable current computed by the second computation circuit (4).

2. The power source apparatus as cited in claim 1 wherein the second computation circuit (4) computes fuse temperature from the time integral of the current flowing through the fuse (6) and the ambient temperature in the vicinity of the fuse (6), and computes the second allowable current from that fuse temperature.

3. The power source apparatus as cited in claim 1 or 2 wherein the second computation circuit (4) repeatedly computes fuse temperature and the second allowable current from the integrated current with a period less than or equal to 1 sec.

4. The power source apparatus as cited in any one of the claims 1-3 wherein the second computation circuit (4) stores the fuse (6) temperature setting in memory; when the computed fuse (6) temperature is lower than the temperature setting, the rated fuse (6) current is used as the second allowable current; and when the computed fuse (6) temperature is higher than the temperature setting, the second allowable current is made lower than the rated current.

5. The power source apparatus as cited in any one of the claims 1-4 wherein fuse (6) current is detected by the sensor that detects battery (1) current.

6. The power source apparatus as cited in any one of the claims 1-5 wherein the second computation circuit (4) computes the second allowable current from the time integral of current flowing through the fuse (6) and fuse (6) degradation.

7. The power source apparatus as cited in any one of the claims 1-6 wherein the load is a motor (22) that drives a vehicle and the current regulating circuit (2) is provided on the vehicle-side of the system; allowable battery (1) current is determined from the first allowable current computed by the first computation circuit (3) and the second allowable current computed by the second computation circuit (4); and the allowable battery (1) current is transmitted to the vehicle-side current regulating circuit (2).
